(19) Europäisches Patentamt
European Patent Office
Office européen des brevets

(11) **EP 3 780 172 A1**

(12) # EUROPEAN PATENT APPLICATION
published in accordance with Art. 153(4) EPC

(43) Date of publication:
**17.02.2021 Bulletin 2021/07**

(51) Int Cl.:
*H01M 4/139* (2010.01)    *H01M 4/13* (2010.01)
*H01M 4/62* (2006.01)    *H01M 4/66* (2006.01)

(21) Application number: **19784997.9**

(22) Date of filing: **22.03.2019**

(86) International application number:
**PCT/JP2019/012204**

(87) International publication number:
**WO 2019/198467 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2018   JP 2018074854**

(71) Applicant: **NISSAN MOTOR CO., LTD.**
**Yokohama-shi, Kanagawa 221-0023 (JP)**

(72) Inventors:
• **TANAKA, Hiroyuki**
  **Atsugi-shi, Kanagawa 243-0123 (JP)**
• **NAKANO, Takeshi**
  **Atsugi-shi, Kanagawa 243-0123 (JP)**
• **OGIHARA, Wataru**
  **Atsugi-shi, Kanagawa 243-0123 (JP)**
• **KAWAKITA, Kenichi**
  **Kyoto-shi, Kyoto 605-0995 (JP)**
• **NAKASHIMA, Yusuke**
  **Kyoto-shi, Kyoto 605-0995 (JP)**
• **KUSANO, Ryosuke**
  **Kyoto-shi, Kyoto 605-0995 (JP)**

(74) Representative: **Grünecker Patent- und Rechtsanwälte**
**PartG mbB**
**Leopoldstraße 4**
**80802 München (DE)**

(54) ## MANUFACTURING METHOD OF NONAQUEOUS ELECTROLYTE SECONDARY BATTERY

(57)   A method for producing a non-aqueous electrolyte secondary battery in which the internal resistance of the battery is decreased, and which has a high capacity and high cycle durability, is provided.

A method for producing a non-aqueous electrolyte secondary battery that comprises a current collector and an electrode active material layer disposed on a surface of the current collector, the electrode active material layer comprising a non-bound body including an electrode active material, the method comprising a step of applying an electrode active material slurry including an electrode active material, a lithium salt, and a non-aqueous solvent on the surface of the current collector and thereby forming a coating film, wherein a water content of the electrode active material slurry is less than 500 ppm by mass.

EP 3 780 172 A1

**Description**

**TECHNICAL FIELD**

The present invention relates to a method for producing a non-aqueous electrolyte secondary battery.

**BACKGROUND ART**

In recent years, toward the solution to environmental and energy problems, popularization of various electric vehicles is expected. As a vehicle-mounted power supply such as a motor driving power supply, which holds the key to the popularization of these electric vehicles, development of secondary batteries is being zealously conducted. Non-aqueous electrolyte secondary batteries intended for application to vehicle-mounted power supplies are required to have high capacity, and charge-discharge cycle characteristics (cycle durability) that can maintain the capacity even when charge-discharge cycles are repeated for a long time period, are required.

As a technology for enhancing the charge-discharge cycle characteristics (cycle durability) of a battery, for example, the technology described in JP 2002-373701 A is available. Specifically, in the technology described in JP 2002-373701 A, it is described that a coating film is formed on a current collector using a slurry obtainable by mixing an active material, a binder including an acrylic polymer, and a solvent, the current collector is wound around in a non-dried state, and then the coating film is dried under reduced pressure drying conditions.

**SUMMARY OF INVENTION**

Technical Problem

However, the inventors of the present invention conducted an investigation, and it was found that, in the conventional technologies such as that of JP 2002-373701 A, in which the components included in the active material layer are bound by utilizing a binder, there are occasions in which the internal resistance of a battery cannot be sufficiently reduced. Furthermore, as described above, for vehicle mounting applications, it is also required that the capacity be high, and the cycle durability be high.

Therefore, an object of the present invention is to provide a method for producing a non-aqueous electrolyte secondary battery in which the internal resistance of the battery is reduced, which has a high capacity, and which has high cycle durability.

Solution to Problem

The inventors of the present invention conducted a thorough investigation in order to solve the problems described above. As a result, the inventors found that it is effective to control the amount of water in an electrode active material slurry for forming an active material layer comprising a non-bound body including an electrode active material, thus completing the present invention.

That is, the production method according to the present invention is a method for producing a non-aqueous electrolyte secondary battery that comprises a current collector and an electrode active material layer disposed on a surface of the current collector, the electrode active material layer comprising a non-bound body including an electrode active material. Further, a water content in an electrode active material slurry including an electrode active material, a lithium salt, and a non-aqueous solvent is less than 500 ppm by mass.

**BRIEF DESCRIPTION OF DRAWINGS**

Fig. 1 is a cross-sectional view schematically illustrating a bipolar secondary battery according to an embodiment of the present invention.
Fig. 2 is a perspective view illustrating an outer appearance of a flat lithium ion secondary battery, which is a representative embodiment of a secondary battery.

**DESCRIPTION OF EMBODIMENTS**

An aspect of the present invention is a method for producing a non-aqueous electrolyte secondary battery that comprises a current collector and an electrode active material layer disposed on a surface of the current collector, the electrode active material layer comprising a non-bound body including an electrode active material. Then, this production method comprises forming a coating film by applying an electrode active material slurry including an electrode active material, a lithium salt, and a non-aqueous solvent on the surface of the current collector. At this time, the water content of the electrode active material slurry is less than 500 ppm by mass. According to the production method of the present aspect, by having the water content inside a battery well-controlled, a battery in which the internal resistance of the battery has been reduced, and which has a high initial capacity and has the cycle durability further enhanced, can be obtained.

According to the present aspect, since the electrode active material layer comprises a non-bound body including an electrode active material and does not contain a binder for an electrode in the electrode active material layer, the internal resistance of the battery is lowered. Incidentally, the phrase "comprising a non-bound body including an electrode active material" according to the present specification means that the electrode active material is not adhered to each other within the electrode active material layer, which is a non-bound body. On the occasion of the production of such a non-bound body, in the present aspect, a lithium salt and a non-aqueous solvent are included as a solvent of the electrode active material layer slurry. While the present inventors were investigating a means for suppressing a further increase in the internal resistance in a system including a lithium salt and a non-aqueous solvent as a solvent for a slurry at the time of forming an electrode active material layer, the present inventors established a hypothesis that the presence of a lithium salt in the slurry is causative of the increase in the internal resistance. As a result of verification of a cause for such a hypothesis, the inventors paid attention to the moisture in the electrolyte slurry and found that the internal resistance of the battery is noticeably suppressed by adjusting the water content of the electrode active material slurry to less than 500 ppm by mass.

The detailed mechanism by which the above-described effect is shown is not clearly understood; however, the mechanism is speculated as follows. Incidentally, the technical scope of the present invention is not limited to the following mechanism.

In the present aspect, the electrode active material slurry at the time of producing an electrolyte layer of the non-bound body includes an electrode active material, a lithium salt, and a non-aqueous solvent. At this time, when a trace amount of moisture is present in the electrode active material slurry, a decomposition reaction of the lithium salt occurs . For example, the following reactions proceed in $LiPF_6$.

[Chemical Formula 1]    $LiPF_6 \leftrightarrow Li^+ + PF_6^-$    $LiPF_6 \leftrightarrow LiF + PF_5$    $PF_5 + H_2O \rightarrow POF_3 + 2HF$    $POF_3 + H_2O \rightarrow POF_2(OH) + HF$

As a result of the above-described reactions, the amount of the lithium salt ($LiPF_6$) needed for a charging and discharging reaction is reduced, and the reaction resistance increases. Furthermore, corrosion of metal parts of the current collector and the electrode active material is induced by HF thus produced, and resistance also increases.

Furthermore, at the time of charging, the positive electrode side reaches a potential at which electrolysis of water occurs, and as a result, when a trace amount of moisture is present in the electrode active material slurry, hydrogen/oxygen is generated inside the battery thus obtained. Thereby, gases are generated inside the battery, the internal pressure increases, and the respective contact resistances increase.

In the present aspect, by adjusting the water content in the electrode active material slurry to less than 500 ppm by mass, a decomposition reaction of the lithium salt is suppressed, and the amount of generation of gases caused by water decomposition is suppressed, and therefore an increase in the battery internal resistance is suppressed. Thus, it is considered that a battery having excellent initial capacity and cycle durability is obtained.

Hereinafter, although the embodiments of the present invention will be described with reference to drawings, the technical scope of the present invention should be determined based on the description of claims and is not limited only to the following aspects.

Incidentally, hereinafter, non-aqueous electrolyte secondary battery obtained by the production method according to the present invention is explained for convenience, and after that, the production method of the present invention is explained in detail.

As a preferred embodiment of the present invention, a bipolar lithium ion secondary battery, which is one kind of non-aqueous electrolyte secondary batteries, will be described, but is not limited to only the following embodiments. Incidentally, the dimensional ratio in the drawings is exaggerated for the sake of convenience of the description and may differ from the actual ratio in some cases. In the present specification, "X to Y" indicating a range means "X or more and Y or less". In addition, operation and measurement of physical properties and the like are performed under conditions of room temperature (20 to 25°C) /relative humidity of 40 to 50% unless otherwise specified.

In the present specification, the bipolar lithium ion secondary battery is simply referred to as a "bipolar secondary battery" and an electrode for the bipolar lithium ion secondary battery is also simply referred to as a "bipolar electrode".

<Bipolar Secondary Battery>

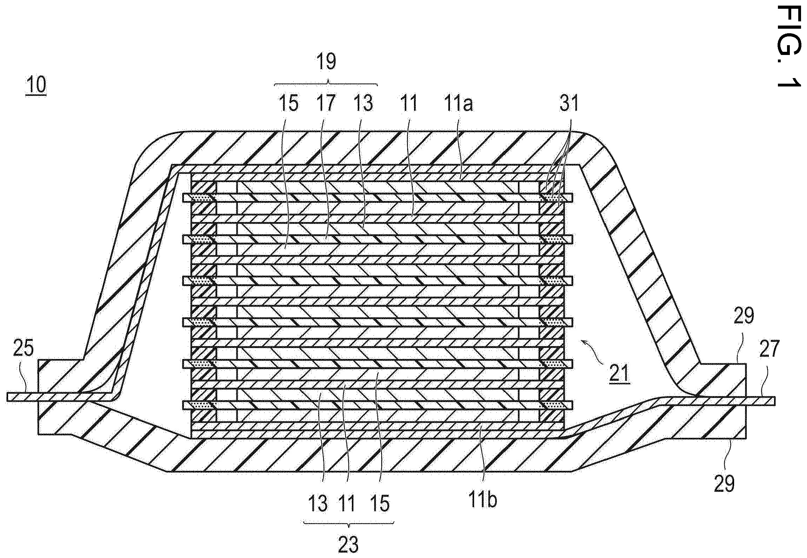

Fig. 1 is a cross-sectional view schematically illustrating a bipolar secondary battery which is one embodiment of the present invention. A bipolar secondary battery 10 shown in Fig. 1 has a structure in which a substantially rectangular power generating element 21, where a charging and discharging reaction actually proceeds, is sealed inside a laminate film 29 as a battery outer casing body.

As shown in Fig. 1, the power generating element 21 of the bipolar secondary battery 10 of the present aspect has a plurality of bipolar electrodes 23 in which a positive electrode active material layer 13 electrically bonded to one surface of a current collector 11 is formed and a negative electrode active material layer 15 bonded to the other surface of the current collector 11 is formed. The respective bipolar electrodes 23 are laminated via an electrolyte layer 17 to form the power generating element 21. Furthermore, the electrolyte layer 17 has a configuration in which an electrolyte is supported in planar center part of a separator as a substrate. In this case, each of the bipolar electrodes 23 and the electrolyte layer 17 are alternately laminated such that the positive electrode active material layer 13 of one of the bipolar electrodes 23 and the negative electrode active material layer 15 of the other bipolar electrode 23 that is adjacent to the one bipolar electrode 23 can face each other via the electrolyte layer 17. That is, these are arranged such that the electrolyte layer 17 is inserted between the positive electrode active material layer 13 of the one bipolar electrode 23 and the negative electrode active material layer 15 of the other bipolar electrode 23 that is adjacent to the one bipolar electrode 23.

The positive electrode active material layer 13, the electrolyte layer 17, and the negative electrode active material layer 15 which are adjacent to each other form one single battery layer 19. Thus, it may be mentioned that the bipolar secondary battery 10 has a configuration in which the single battery layer 19 is laminated. In addition, a seal part (insulating layer) 31 is arranged on outer periphery of the single battery layer 19. Accordingly, liquid junction caused by leakage of an electrolyte solution from the electrolyte layer 17 is prevented, and a contact between neighboring current collectors 11 in a battery or an occurrence of a short-circuit resulting from subtle displacement of an end part of the single battery layer 19 in the power generating element 21, or the like is prevented. Furthermore, the positive electrode active material layer 13 is formed on only one surface of the outermost layer current collector 11a on the positive electrode side which is present on the outermost layer of the power generating element 21. In addition, the negative electrode active material layer 15 is formed on only one surface of the outermost layer current collector 11b on the negative electrode side which is present on the outermost layer of the power generating element 21.

Furthermore, in the bipolar secondary battery 10 shown in Fig. 1, a positive electrode current collecting plate (positive electrode tab) 25 is arranged such that it is adjacent to the outermost layer current collector 11a on the positive electrode side, and extended and drawn from the laminate film 29 as a battery outer casing body. On the other hand, a negative electrode current collecting plate (negative electrode tab) 27 is arranged such that it is adjacent to the outermost layer current collector 11b on the negative electrode side, and also extended and drawn from the laminate film 29.

Moreover, the number of times of laminating the single battery layer 19 is adjusted depending on a desired voltage. Incidentally, in the bipolar secondary battery 10, the number of times of laminating the single battery layer 19 may be reduced if a sufficient output can be secured even if the thickness of the battery is made as small as possible. It is also preferable for the bipolar secondary battery 10 to have a structure in which the power generating element 21 is sealed under reduced pressure in the laminate film 29 as a battery outer casing body and the positive electrode current collecting plate 25 and the negative electrode current collecting plate 27 are drawn to the outside of the laminate film 29 in order to prevent an impact from outside and environmental deterioration at the time of use. In addition, although the explanation is provided by way of an example of a bipolar secondary battery, the type of a non-aqueous electrolyte secondary battery to which the present invention can be applied is not particularly limited. For example, the present invention can also be applied to any non-aqueous electrolyte secondary battery known in the art, such as a so-called parallel laminate type battery in which a power generating element is formed of single battery layers connected to each other in parallel.

Hereinafter, the production method of the present aspect will be described.

<Method for producing battery>

The present invention relates to a method for producing a non-aqueous electrolyte secondary battery. An embodiment of the present production method includes a step of applying an electrode active material slurry on the surface of a current collector and thereby forming a coating film (step (2)). Suitably, the method includes, prior to step (2), a step of mixing an electrode active material, a lithium salt, and a non-aqueous solvent and thereby preparing an electrode active material slurry (step (1)). More suitably, the production method includes a step (3) of disposing a porous sheet on the electrode active material slurry applied in the step (2) and pressing the assembly.

Here, the method for producing an electrode according to the present aspect has a feature that the step of preparing an electrode active material slurry is devised. In the following description, the method for producing a non-aqueous electrolyte secondary battery according to the present aspect, including these features as well, will be described in detail.

Incidentally, in the present aspect, since the electrode active material layer is a non-bound body, the electrode active material layer substantially does not include a binder. Therefore, a heating and drying step is not required. Even from the viewpoint of productivity, it is preferable that the production method of the present invention do not include a heating and drying step after the step (1).

[Preparation of electrode active material slurry (step (1))]

In the step (1), an electrode active material, a lithium salt, and a non-aqueous solvent are mixed, and an electrode active material slurry is prepared.

At this time, the water content of the electrode active material slurry is less than 500 ppm by mass. When the water content of the electrode active material slurry is less than 500 ppm by mass, a battery in which the internal resistance is markedly low, the initial capacity is high, and the cycle characteristics are excellent (durability is excellent) is obtained (see Examples and Comparative Example 1 that will be described below). From the viewpoint of enhancing the initial capacity and the cycle characteristics, the water content of the electrode active material slurry is preferably 250 ppm by mass or less. From the viewpoints of suppression of an increase in the internal resistance, and the initial capacity and the cycle characteristics, the water content of the electrode active material slurry is more preferably 200 ppm by mass or less, and even more preferably 150 ppm by mass or less.

Incidentally, it is more desirable as the water content of the electrode active material slurry is lower; however, it is difficult to adjust the water content to 10 ppm by mass or less. Furthermore, when the water content of the electrode active material slurry is lowered, the yield of the battery is lowered. On the other hand, even if the water content is lowered beyond a certain value, the effect is saturated. Therefore, in view of the yield at the time of production and the saturation of effect, the water content of the electrode active material slurry is preferably 10 ppm by mass or more, more preferably 20 ppm by mass or more, and even more preferably 50 ppm by mass or more.

According to the present specification, regarding the water content, a value measured by the method described in the Examples is employed.

The water content of the electrode active material slurry is not particularly limited; however, it is preferable to control the water content particularly by controlling the moisture contained in the electrode active material that is used for the electrode active material slurry. Suitably, the moisture contained in the electrode active material, and depending on cases, the moisture contained in a conductive aid, is controlled. The means for controlling the contained moisture is not particularly limited; however, from the viewpoint that it is easy to control the contained moisture, it is preferable to dry the electrode active material, and depending on cases, a conductive aid, and it is more preferable to perform drying under reduced pressure. Therefore, a suitable embodiment of the present invention has a step of drying the electrode active material before mixing the electrode active material, the lithium salt, and the non-aqueous solvent. Still another suitable embodiment has a step of drying the conductive aid before mixing the conductive aid, the electrode active material, the lithium salt, and the non-aqueous solvent. Furthermore, another suitable embodiment has a step of drying the electrode active material and the conductive aid before mixing the conductive aid, the electrode active material, the lithium salt, and the non-aqueous solvent.

The control of the moisture contained in the electrode active material used in the electrode active material slurry is appropriately set such that the water content of the electrode active material slurry becomes less than 500 ppm by mass; however, it is preferable that the moisture contained in the electrode active material be adjusted specifically to 400 ppm by mass or less, and more preferably to 350 ppm by mass or less. Meanwhile, regarding the moisture contained in the electrode active material, a value obtained by performing measurement using the method described in the Examples is employed.

The drying temperature at the time of drying the electrode active material and/or the conductive aid is appropriately set so as to control the moisture contained. The drying temperature at the time of drying the electrode active material and/or the conductive aid is preferably higher than 100°C, more preferably 110°C or higher, even more preferably 120°C or higher, and still more preferably 140°C or higher. Furthermore, the upper limit of the drying temperature is preferably in the range in which deterioration of the material does not occur, and specifically, the upper limit is preferably 250°C or lower, and more preferably 200°C or lower. Incidentally, when the electrode active material and the conductive aid are dried, the electrode active material and the conductive aid may be dried separately, or drying may be performed after the two are mixed; however, from the viewpoint of production efficiency, it is preferable to perform drying after mixing the electrode active material and the conductive aid. Furthermore, it is preferable that drying be performed under reduced pressure. When drying is performed under reduced pressure, moisture removal is carried out efficiently. The reduced pressure conditions are not particularly limited, and for example, the reduced pressure is 0.1 to 50 kPa, and 0.2 to 30 kPa. Furthermore, the drying time is appropriately set in consideration of the drying temperature, productivity, and the like such that the water content in the electrode active material slurry is less than 500 ppm by mass; however, for example, the drying time is preferably more than 6 hours to 30 hours or less, and more preferably 8 to 25 hours.

The electrode active material slurry including an electrode active material, a lithium salt, and a non-aqueous solvent may be any one of a slurry for forming a negative electrode active material layer intended for forming a negative electrode active material layer, or a slurry for forming a positive electrode active material layer intended for forming a positive electrode active material layer, or may be both. Since it is easier to obtain the effect of the present invention, it is preferable that both the slurry for forming a negative electrode active material layer intended for forming a negative electrode active material layer and the slurry for forming a positive electrode active material layer intended for forming a positive electrode active material layer be the electrode active material slurry of the present embodiment.

The method of preparing the electrode active material slurry by mixing an electrode active material, a Li salt, and a non-aqueous solvent is not particularly limited, and conventionally known findings, such as a mixing method of mixing various components, are appropriately referred to. Furthermore, the order of adding members is also not particularly limited; however, specifically, a method of mixing a lithium salt and a non-aqueous solvent to produce an electrolyte solution, and then adding an electrode active material thereto, and the like may be mentioned. Furthermore, examples of a mixing machine include mixers such as a rotating and revolving mixer, a planetary mixer, and a Homo mixer; and dispersing machines such as an ultrasonic dispersing machine and a jet mill. Among them, it is preferable to perform mixing with a rotating and revolving type stirring machine such as a rotating and revolving mixer. The mixing time is appropriately set so as to achieve uniform mixing, and for example, the mixing time is 10 to 300 seconds.

The amount of moisture included in the space in which the electrode active material slurry is prepared is preferably 150 ppm by volume or less. By adjusting the amount of moisture included in the space in which the electrode active material slurry is prepared is adjusted to the above-mentioned upper limit or less, an increase in the internal resistance of the battery can be further suppressed, and the initial capacity and the durability are also increased. This is speculated to be because incorporation of moisture into the electrode active material slurry is suppressed by suppressing the amount of moisture in the production atmosphere, and decomposition of the above-mentioned lithium salt by moisture is further suppressed. The amount of moisture included in the space in which the electrode active material slurry is prepared is more preferably 130 ppm by volume or less, even more preferably 100 ppm by volume or less, and still more preferably 50 ppm by volume or less. Furthermore, it is more preferable that the amount of moisture included in the space in which the electrode active material slurry is prepared be lower; however, even when the amount of moisture included in the production space is lowered, the effect is saturated. Therefore, in view of the yield at the time of production and the saturation of the effect, the amount of moisture included in the space in which the electrode active material slurry is prepared is preferably 1 ppm by volume or more, and more preferably 5 ppm by volume or more.

Here, the space in which the electrode active material slurry is prepared refers to a (smallest) closed space in which the electrode active material slurry exists. Regarding the space in which the electrode active material slurry is prepared, for example, a dry room may be mentioned. Furthermore, the space in which the electrode active material slurry is prepared refers to a space in which the various components of the electrode active material, the Li salt, and the non-aqueous solvent are mixed.

Furthermore, after the preparation of the electrode active material slurry, in the stage of applying the electrode active material slurry on the surface of a current collector, in the stage of producing an electrode, and after the preparation of the electrode, in the stage of producing a battery, the amount of moisture in the production environment is preferably controlled to be 150 ppm by volume or less. Thereby, since moisture incorporation into various members is suppressed, gas generation is suppressed, an increase in the internal resistance of the battery can be further suppressed, and the initial capacity and the durability are also enhanced. The amount of moisture in the production environment is more preferably 130 ppm by volume or less, even more preferably 100 ppm by volume or less, and still more preferably 50 ppm by volume or less. Furthermore, it is more preferable, when the amount of moisture in the production environment is lower; however, even when the amount of moisture included in the production environment is lowered, the effect is saturated. Therefore, in view of the yield at the time of production and the saturation of the effect, the amount of moisture included in the production environment is preferably 1 ppm by volume or more, and more preferably 5 ppm by volume or more.

The amount of moisture in the production environment (for example, the amount of moisture in the space in which the electrode active material slurry is prepared) in each of the above-described production stages can be calculated by performing calculation from the dew point of the production environment (for example, space in which the electrode active material slurry is prepared). Therefore, the dew point of the production environment (for example, space in which the electrode active material slurry is prepared) in the various production stages is preferably a dry atmosphere at -40°C or lower, -40°C to -80°C, and -45°C to -75°C in preferable order. A dry environment can be achieved by, for example, a method of discharging dry air or adsorbing moisture. In order to realize such a dry environment, a method of performing exhaustion or suction of air and bringing a low-humidity state, a method of cutting off the outside air in a dry air atmosphere, or the like can be used. For example, in a method of performing exhaustion or suction of air and bringing a low-humidity state, a dry chamber can be utilized, and in a method of bringing a state in which the outside air is cut off in a dry air atmosphere or the like, a glove box provided with a means for blowing dry air can be used. The atmosphere gas is preferably an inert atmosphere of nitrogen gas, argon gas, or the like.

The concentration of the electrode active material slurry is not particularly limited. However, from the viewpoint of facilitating the application in the step (2) or pressing in the step (3), the concentration of the total solid content with respect to 100% by mass of the active material slurry is preferably 40% to 75% by mass, more preferably 45% to 70% by mass, and even more preferably 60% to 70% by mass. When the concentration is in the above-described range, an active material layer having a sufficient thickness can be easily formed by the application in the step (2), and also it is easy to adjust the porosity and the density by the pressing in the step (3).

The electrode active material slurry may also include other components. For example, in the case of using a conductive aid and the like as the constituent components of the electrode active material layer, the components can be incorporated simultaneously in the present step.

As described above, the electrode active material slurry substantially does not include a binder. The content of the binder is preferably 1% by mass or less, more preferably 0.5% by mass or less, even more preferably 0.2% by mass or less, particularly preferably 0.1% by mass or less, and most preferably 0% by mass, with respect to 100% by mass of the total solid content included in the active material layer.

(Electrode active material)

According to the present invention, the electrode active material may be in the form of being coated with a coating agent including a coating resin and optionally a conductive aid. Electrode active material particles in a state of being coated with a coating agent may have a core-shell structure in which a shell part comprising a coating agent including a coating resin and optionally a conductive aid is formed on the surface of a core part comprising an electrode active material. In such an embodiment, the conductive aid included in the coating agent can contribute to an enhancement of high-rate power output characteristics of the battery by forming electron conductive paths in the coating agent and reducing the electron transfer resistance of the electrode active material layer. This embodiment is disclosed in, for example, WO 2016/104679 A (US 2018/048,023 A).

(Positive Electrode Active Material)

Examples of the positive electrode active material include a lithium-transition metal composite oxide such as $LiMn_2O_4$, $LiCoO_2$, $LiNiO_2$, $Li(Ni-Mn-Co)O_2$, or a compound in which some of these transition metals are replaced by other elements, a lithium-transition metal phosphate compound, a lithium-transition metal sulfate compound, and the like. Two or more positive electrode active materials may be used in combination in some cases. The lithium-transition metal composite oxide is preferably used as the positive electrode active material from the viewpoint of capacity and output characteristics. A composite oxide containing lithium and nickel is more preferably used. $Li(Ni-Mn-Co)O_2$ and a compound in which some of these transition metals are replaced by other elements (hereinafter also simply referred to as an "NMC composite oxide"), a lithium-nickel-cobalt-aluminum composite oxide (hereinafter also simply referred to as an "NCA composite oxide"), or the like is more preferably used. The NMC composite oxide has a layered crystal structure in which a lithium atom layer and a transition metal (Mn, Ni, and Co are orderly arranged) atomic layer are alternately laminated via an oxygen atom layer. In addition, one Li atom is included per atom of a transition metal M, and the amount of Li that can be taken out is twice that of a spinel-based lithium manganese oxide, that is, a supply capacity is doubled, and the capacity can thus be high.

As described above, the NMC composite oxide also includes composite oxides in which some of the transition metal elements are replaced by other elements. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like; Ti, Zr, Nb, W, P, Al, Mg, V, Ca, Sr, or Cr is preferable; Ti, Zr, P, Al, Mg, or Cr is more preferable; and Ti, Zr, Al, Mg, or Cr is even still more preferable from the viewpoint of improving the cycle characteristics.

Since the NMC composite oxide has a high theoretical discharge capacity, it preferably satisfies General Formula (1): $LiaNibMncCodMxO_2$ (in which a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1; and M is at least one element selected from the group consisting of Ti, Zr, Nb, W, P, Al, Mg, V, Ca, Sr, and Cr). Here, a represents the atomic ratio of Li, b represents the atomic ratio of Ni, c represents the atomic ratio of Mn, d represents the atomic ratio of Co, and x represents the atomic ratio of M. In General Formula (1), $0.4 \leq b \leq 0.6$ is preferably satisfied from the viewpoint of cycle characteristics. In addition, the composition of each element can be measured by, for example, inductively coupled plasma (ICP) emission spectrometry.

In general, it is known that nickel (Ni), cobalt (Co), and manganese (Mn) contribute to capacity and output characteristics from the viewpoints of improving the purity of a material and improving the electron conductivity. Some of the transition metals in a crystal lattice are replaced by Ti and the like. Some of atoms of a transition metal element are preferably replaced by atoms of other elements from the viewpoint of cycle characteristics, and $0 < x \leq 0.3$ is particularly preferably satisfied in General Formula (1). Due to the solid solution of at least one selected from the group consisting of Ti, Zr, Nb, W, P, Al, Mg, V, Ca, Sr, and Cr, the crystal structure is stabilized, and as a result, it is considered that reduction in capacity of the battery can be prevented even after repeated charge/discharge, and thus, excellent cycle characteristics can be achieved.

As a more preferable embodiment, in General Formula (1), b, c, and d preferably satisfy $0.44 \leq b \leq 0.51$, $0.27 \leq c \leq 0.31$, and $0.19 \leq d \leq 0.26$ from the viewpoint of improving a balance between the capacity and the life characteristics. For example, $LiNi_{0.5}Mn_{0.3}Co_{0.2}O_2$ has a larger capacity per unit weight than $LiCoO_2$, $LiMn_2O_4$, $LiNi_{1/3}Mn_{1/3}Co_{1/3}O_2$, or the like which has been proven to be satisfactory in a general consumer-use battery. This makes it possible to improve the energy density and brings about an advantage that a compact and high-capacity battery can be manufactured, and thus, it is preferable, also from the viewpoint of a cruising distance. $LiNi_{0.5}Mn_{0.3}Co_{0.2}O_2$ has excellent life characteristics similar to $LiNi_{1/3}Mn_{1/3}Co_{1/3}O_2$.

Incidentally, it is certain that a positive electrode active material other than the above-mentioned materials may be used. The average particle diameter of the positive electrode active material is not particularly limited, but is preferably 1 to 100 $\mu$m, and more preferably 1 to 20 $\mu$m from the viewpoint of a high output.

(Negative Electrode Active Material)

Examples of the negative electrode active material include a carbon material such as graphite, soft carbon, hard carbon, and the like, a lithium-transition metal composite oxide (for example, $Li_4Ti_5O_{12}$), a metal material (tin, silicon), a lithium alloy-based negative electrode material (for example, a lithium-tin alloy, a lithium-silicon alloy, a lithium-aluminum-manganese alloy, and the like), etc. In some cases, two or more kinds of the negative electrode active materials may be used in combination. Preferably, the carbon material, the lithium-transition metal composite oxide, or the lithium alloy-based negative electrode material is used preferably as the negative electrode active material from the viewpoint of the capacity and the output characteristics. The negative electrode active material other than the above materials can be used. It is preferable to use the carbon material as the negative electrode active material from the viewpoint of providing a structurally stable electrode material.

The average particle diameter of the negative electrode active material is not particularly limited, but is preferably 1 to 100 $\mu$m, and more preferably 1 to 20 $\mu$m from the viewpoint of a high output.

(Conductive Aid)

The conductive aid has a function of forming an electron conductive path (conductive path) in the electrode active material layer. When such an electron conductive path is formed in the electrode active material layer, the internal resistance of the battery can be reduced. In particular, it is preferable that at least a part of the conductive aid forms a conductive path electrically connecting two principal surfaces of the electrode active material layer (in the present embodiment, the first principal surface in contact with the electrolyte layer side of the electrode active material layer and the second principal surface in contact with the current collector side are electrically connected with each other). By having such a form, the electron transfer resistance in a thickness direction in the electrode active material layer can be further reduced. Furthermore, whether or not at least a part of the conductive aid forms a conductive path electrically connecting two principal surfaces of the electrode active material layer (in the present embodiment, the first principal surface in contact with the electrolyte layer side of the electrode active material layer and the second principal surface in contact with the current collector side are electrically connected with each other) can be confirmed by observing a cross-section of the electrode active material layer using an SEM or an optical microscope.

It is preferable that the conductive aid is a conductive fiber having a fibrous form from the viewpoint that it is secured to form such a conductive path. Specific examples of the conductive aid include a PAN-based carbon fiber, a pitch-based carbon fiber, a carbon nanofiber, a carbon nanotube, a conductive fiber obtained by uniformly dispersing a metal or graphite having good conductivity in a synthetic fiber; a metal fiber obtained by fibrillization of a metal such as stainless steel; a conductive fiber obtained by coating a surface of an organic fiber with a metal; a conductive fiber obtained by coating the surface of an organic fiber with a resin including a conductive material; and the like. Among those, the carbon fiber is preferable since it has excellent conductivity and light weight.

However, a conductive aid having no fibrous form may also be used. For example, a conductive aid having a particulate form (for example, a spherical from) can be used. In a case where the conductive aid is particulate, the shape of the particle is not particularly limited, and may be any shape of powdery, spherical, planar, columnar, amorphous, phosphatoid, and spindle-like shapes, and other shape. The average particle diameter (primary particle diameter) in a case where the conductive aid is particulate is not particularly limited, but is preferably approximately 0.01 to 10 $\mu$m from the viewpoint of electric characteristics of the battery. Furthermore, in the present specification, the "particle diameter" means the maximum distance L between two arbitrary points on the contour line of the conductive aid. As the value of the "average particle diameter", a value calculated as an average value of the particle diameters of the particles observed within several views to several tens views using an observation means such as a scanning electron microscope (SEM), a transmission electron microscope (TEM), and the like is intended to be adopted.

Examples of the conductive aid having a particulate form (for example, a spherical form) include metals such as aluminum, stainless steel (SUS), silver, gold, copper, titanium, and the like, and an alloy or metal oxide containing such metals; a carbon such as a carbon nanotube (CNT), carbon black (specifically acetylene black, Ketjen black (registered trademark), furnace black, channel black, thermal lamp black, and the like); etc., but are not limited thereto. In addition, a material obtained by coating a periphery of a particulate ceramic material or a resin material with the metal material by plating or the like can also be used as the conductive aid. Among those conductive aids, a material including at least one selected from the group consisting of aluminum, stainless steel, silver, gold, copper, titanium, and carbon is preferable, a material containing at least one selected from the group consisting of aluminum, stainless steel, silver, gold, and carbon is more preferable, and a material including at least one kind of carbon is still more preferable from the viewpoint of electrical stability. These conductive aids may be used alone or in combination of two or more kinds thereof.

The content of the conductive aid in the electrode active material layer is preferably 2% to 20% by mass with respect to 100 parts by mass of the total solid content (sum of the solid content of all members) of the electrode active material layer. When the content of the conductive aid is in the above-described range, there is an advantage that electron conductive paths can be satisfactorily formed in the electrode active material layer, and also, a decrease in the energy density of the battery can be suppressed.

In the present aspect, a lithium salt and a non-aqueous solvent are mixed with an electrode active material. At this time, it is preferable to use an electrolyte solution including an electrode active material, a lithium salt, and a non-aqueous solvent. The electrolyte solution is used as a slurry-forming solvent, and at the same time, the electrolyte solution also works as the electrolyte solution that is included in the electrode active material layer to be formed. It is preferable that the non-aqueous solvent can dissolve an electrolyte salt.

The electrolyte solution to be used may have the same composition as that of the electrolyte solution that is included in the electrolyte layer of the battery, or may have a different composition; however, from the viewpoint of simplification of the production process by omitting a drying step, it is preferable that the electrolyte solution have the same composition.

(Lithium salt)

Examples of the lithium salt include Li $(C_2F_5SO_2)_2$N, $LiPF_6$, $LiBF_4$, $LiClO_4$, $LiAsF_6$, $LiCF_3SO_3$, and the like. Among them, from the viewpoints of the battery power output and the charge-discharge cycle characteristics, $LiPF_6$ and $Li[(FSO_2)_2N]$ (LiFSI) are more preferred, and $LiPF_6$ is particularly preferred.

The concentration of the lithium salt with respect to the total amount of the lithium salt and the non-aqueous solvent is preferably 0.1 to 3.0 M, and more preferably 0.8 to 2.2 M.

(Non-aqueous solvent)

Examples of the non-aqueous solvent to be used include dimethyl carbonate (DMC), diethyl carbonate (DEC), dipropyl carbonate (DPC), ethyl methyl carbonate (EMC), methyl propionate (MP), methyl acetate (MA), methyl formate (MF), 4-methyldioxolane (4MeDOL), dioxolane (DOL), 2-methyltetrahydrofuran (2MeTHF), tetrahydrofuran (THF), dimethoxyethane (DME), ethylene carbonate (EC), propylene carbonate (PC), butylene carbonate (BC), $\gamma$-butyrolactone (GBL), and the like. Among them, regarding the non-aqueous solvent, dimethyl carbonate (DMC), diethyl carbonate (DEC), dipropyl carbonate (DPC), ethyl methyl carbonate (EMC), ethylene carbonate (EC), propylene carbonate (PC), and butylene carbonate (BC) are preferred, and it is preferable that the non-aqueous solvent include ethylene carbonate. Regarding the non-aqueous solvent to be added, only one kind may be used alone, or two or more kinds thereof may be used in combination.

In the present step, additives other than the above-mentioned components may be further mixed in. Furthermore, the additives may be incorporated into the electrolyte solution. Specific examples of such compounds include, for example, vinylene carbonate, methyl vinylene carbonate, dimethyl vinylene carbonate, phenyl vinylene carbonate, diphenyl vinylene carbonate, ethyl vinylene carbonate, diethyl vinylene carbonate, vinyl ethylene carbonate, 1,2-divinyl ethylene carbonate, 1-methyl-1-vinyl ethylene carbonate, 1-methyl-2-vinyl ethylene carbonate, 1-ethyl-1-vinyl ethylene carbonate, 1-ethyl-2-vinyl ethylene carbonate, vinyl vinylene carbonate, allyl ethylene carbonate, vinyl oxymethyl ethylene carbonate, allyl oxymethyl ethylene carbonate, acryl oxymethyl ethylene carbonate, methacryl oxymethyl ethylene carbonate, ethynyl ethylene carbonate, propargyl ethylene carbonate, ethynyl oxymethyl ethylene carbonate, propargyl oxyethylene carbonate, methylene ethylene carbonate, 1,1-dimethyl-2-methylene ethylene carbonate, and the like. Regarding these additives, only one kind thereof may be used alone, or two or more kinds thereof may be used in combination. Furthermore, the amount of use in the case of using the additives in the electrolyte solution is preferably 0.5% to 10% by mass, and more preferably 0.5% to 5% by mass, with respect to 100% by mass of the electrolyte solution before adding the additives.

[Step of forming coating film by applying electrode active material slurry on surface of current collector (step (2))]

In the step (2), the electrode active material slurry is applied on the surface of the current collector. The coating film formed by this application constitutes the electrode active material layer. The application method is not particularly limited, and conventionally known findings are appropriately referred to.

(Current collector)

The current collector has a function of mediating the transfer of electrons from one face that is in contact with the positive electrode active material layer to the other face that is in contact with the negative electrode active material layer. The material constituting the current collector is not particularly limited; however, for example, a metal or a resin having electrical conductivity can be employed.

Specifically, examples of the metal include aluminum, nickel, iron, stainless steel, titanium, copper, and the like. In addition to these, a clad material of nickel and aluminum, a clad material of copper and aluminum, a plating material of combinations of these metals, or the like can be preferably used. Furthermore, a foil obtained by coating a metal surface with aluminum is also acceptable. Alternatively, a carbon-coated aluminum foil is also acceptable. Above all, from the viewpoint of safety and from the viewpoint that the effects of the present invention are further provided as will be described below, it is preferable to use a resin current collector as the current collector.

Regarding the resin having electrical conductivity, a resin obtained by adding a conductive filler as necessary to a conductive polymer material or a non-conductive polymer material may be mentioned. Examples of the conductive polymer material include polyaniline, polypyrrole, polythiophene, polyacetylene, poly-para-phenylene, polyphenylene vinylene, polyacrylonitrile, polyoxadiazole, and the like. Since these conductive polymer materials have sufficient electrical conductivity even if a conductive filler is not added thereto, it is advantageous from the viewpoint of facilitation of the production process or weight reduction of the current collector.

Examples of the non-conductive polymer material include polyethylene (PE; high-density polyethylene (HDPE), low-density polyethylene (LDPE), and the like), polypropylene (PP), polyethylene terephthalate (PET), polyether nitrile (PEN), polyimide (PI), polyamideimide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. These non-conductive polymer materials can have excellent potential resistance or solvent resistance.

To the above-described conductive polymer material or non-conductive polymer material, a conductive filler can be added as necessary. Particularly, in a case in which the resin that serves as a base material of the current collector comprises a non-conductive polymer only, a conductive filler is necessarily essential in order to impart electrical conductivity to the resin.

Regarding the conductive filler, any substance having electrical conductivity can be used without particular limitations. For example, as materials that are excellent in terms of electrical conductivity, potential resistance, or lithium ion blocking properties, a metal, conductive carbon, and the like may be mentioned. The metal is not particularly limited; however, it is preferable that the metal include at least one metal selected from the group consisting of Ni, Ti, Al, Cu, Pt, Fe, Cr, Sn, Zn, In, Sb, and K or an alloy or a metal oxide including these metals. Furthermore, the conductive carbon is not particularly limited. Preferably, the conductive carbon includes at least one selected from the group consisting of acetylene black, VULCAN (registered trademark), BLACK PEARL (registered trademark), carbon nanofibers, KETJEN BLACK (registered trademark), carbon nanotubes, carbon nanohorns, carbon nanoballoons, and fullerene.

The amount of addition of the conductive filler is not particularly limited as long as it is an amount that can impart sufficient electrical conductivity to a current collector, and the amount of addition is generally about 5% to 80% by mass.

The current collector of the present embodiment may have a single-layer structure comprising a single material or may have a laminated structure in which layers comprising these materials are appropriately combined. From the viewpoint of weight reduction of the current collector, the current collector may include at least a conductive resin layer comprising a resin having electrical conductivity. Furthermore, from the viewpoint of blocking the transfer of lithium ions between single battery layers, a metal layer may be provided on a portion of the current collector.

In the present aspect, it is preferable that the current collector be a resin current collector. Since a resin current collector easily adsorbs moisture compared to a metal current collector, when moisture exists in the system, an increase in the internal resistance is more likely to be actualized. Therefore, according to the production method of the present aspect, an effect of suppressing an increase in the internal resistance becomes more noticeable. Furthermore, the water content of the resin current collector is preferably 400 ppm by mass or less. When the water content of the resin current collector is 400 ppm by mass or less, an effect of suppressing an increase in the internal resistance is further exhibited, and the initial capacity and durability are also further increased. The water content of the resin current collector is preferably 300 ppm by mass or less, and more preferably 250 ppm by mass or less . Incidentally, since it is more preferable that the water content of the resin current collector is lower, the lower limit is not limited. However, even when the water content of the resin current collector is lowered, the effect is saturated. Therefore, in view of the yield at the time of production and the saturation of the effect, the water content of the resin current collector is preferably 10 ppm by mass or more, and more preferably 30 ppm by mass or more. The water content of the resin current collector can be controlled by, for example, putting the production environment in a dry environment. Specifically, it is preferable that the production environment be in a dry atmosphere in which the dew point is -15°C or lower, -30°C to -80°C, or -40°C to -75°C in preferable order. The dry environment is similar to that described in the section for the atmosphere of the production of the electrode active material slurry.

When the electrode active material slurry is applied on the surface of the current collector, it is preferable that the current collector be adsorbed to a fixture under reduced pressure, or that a non-aqueous solvent which does not include a hydroxyl group and has a water content of less than 50 ppm by mass is applied on a fixture and then the current collector is disposed on the fixture. By performing the application by such a method, incorporation of moisture is suppressed, an increase in the internal resistance of the battery can be further suppressed, and the initial capacity and durability are also increased.

The method of adsorbing the current collector to a fixture under reduced pressure may be, for example, a method of using an adsorption surface plate and fixing the current collector on the surface plate by lowering the pressure.

With regard to the method of applying a non-aqueous solvent which does not include a hydroxyl group and has a water content of less than 50 ppm by mass on a fixture and then disposing the current collector on the fixture, examples of the non-aqueous solvent that does not include a hydroxyl group include ethers such as diethyl ether, tetrahydrofuran, diphenyl ether, anisole, and dimethoxybenzene; amides such as N,N-dimethylformamide and N,N-dimethylacetamide; nitriles such as acetonitrile, propionitrile, and benzonitrile; ester compounds or carbonate compounds such as acetone, methyl ethyl ketone, methyl isobutyl ketone, ethyl acetate, butyl acetate, ethylene carbonate, and propylene carbonate; aromatic hydrocarbons such as benzene, toluene, and xylene; halogenated hydrocarbons such as chlorobenzene, methylene chloride, chloroform, chlorobenzene, and benzotrifluoride; and the like. Among them, the non-aqueous solvent is preferably a carbonate compound such as ethylene carbonate or propylene carbonate, which can be used as a solvent for the electrolyte solution. These carbonate compounds may be used singly or in combination of two or more kinds thereof.

The water content of the non-aqueous solvent is preferably 40 ppm by mass or less, and more preferably 30 ppm by mass or less. Incidentally, it is more preferable that the water content of the non-aqueous solvent be smaller; however, since the effect is saturated, the water content is preferably 1 ppm by mass or more, and preferably 5 ppm by mass or more.

In a case in which the water content of the non-aqueous solvent is 50 ppm by mass or more, dehydration of the non-aqueous solvent may be carried out. Regarding the dehydration method, distillation purification of the non-aqueous solvent, use of an insoluble water adsorbent, aeration purge using a dried inert gas, heating, vacuum heating, and the like may be mentioned.

The coating thickness of the electrode active material slurry is appropriately set by taking account of the thickness of the electrode active material layer to be formed. The coating thickness of the electrode active material slurry is preferably 200 to 2,000 $\mu$m, and more preferably 400 to 1,000 $\mu$m.

In the production method of the present aspect, after application of the electrode active material slurry, a battery can be produced particularly without drying the electrode active material slurry. Suitably, the production method of the present aspect does not include a drying step after the step (1). Therefore, it is difficult to cut out the electrode into a desired area after the application of the active material slurry. Therefore, in the present step, it is necessary to apply the active material slurry on the surface of the current collector to obtain a desired area. In order to do so, the surface of the current collector other than the application portion may be subjected to a masking treatment or the like in advance.

[Step (3) of disposing porous sheet on electrode active material slurry applied in step (2) and pressing]

In the step (3), a porous sheet is disposed on the active material slurry (coating film) applied in the step (2), and the assembly is pressed.

The porous sheet is used for the purpose of preventing the slurry from attaching to the pressing apparatus when the electrode active material slurry is pressed, and for the purpose of absorbing any excess electrolyte solution exuding at the time of pressing. Therefore, the material and the form of the porous sheet are not particularly limited as long as the above-described purposes can be achieved.

For example, as the porous sheet, a product similar to a microporous film, a nonwoven fabric, or the like, all of which are used as separators in the present technical field, can be used. Specific examples of the microporous film include microporous films formed of hydrocarbon-based resins such as polyimide, aramid, and polyvinylidene fluoride-hexafluoropropylene (PVdF-HFP); glass fibers, and the like. Furthermore, examples of the nonwoven fabric include fabrics that use cotton, rayon, acetate, nylon, polyester; polyolefins such as PP and PE; polyimide, aramid, and the like, singly or as a mixture.

Incidentally, the porous sheet may be removed after pressing or may be used directly as a separator of the battery. In the case of using the porous sheet directly as a separator after pressing, an electrolyte layer may be formed by using only this porous sheet as a separator, or an electrolyte layer may be formed by combining this porous sheet with another separator (that is, constructing a separator from two or more sheets).

The pressing apparatus of the step (3) is preferably an apparatus that uniformly applies pressure to the entire surface of the applied electrode active material slurry, and specifically, HIGH PRESSURE JACK J-1 (manufactured by AS ONE CORPORATION) can be used. The pressure at the time of pressing is not particularly limited; however, the pressure is preferably 1 to 45 MPa, more preferably 3 to 40 MPa, and even more preferably 12 to 40 MPa. When the pressure is in the above-described range, the porosity and density of the electrode active material layer according to the above-mentioned preferred embodiment can be easily realized.

In this manner, the electrode active material layer is obtained.

The electrode active material layer comprises a non-bound body including the electrode active material. The phrase "comprises a non-bound body including the electrode active material" means that the electrode active material is in a state in which the mutual positions are not fixed by a binding agent (also referred to as binder). Furthermore, whether the active material layer comprises a non-bound body of the electrode active material can be verified by observing whether the active material layer is disintegrated in a case in which the active material layer is completely impregnated with the electrolyte solution. In a case in which the active material layer comprises a bound body including the electrode active material, the shape can be maintained for one minute or longer; however, in a case in which the active material layer comprises a non-bound body including the electrode active material, disintegration of the shape occurs in a time of shorter than 1 minute.

In order to produce an active material layer comprising a non-bound body including the electrode active material, a technique by which a step of drying a coating film comprising the slurry at the time of forming the active material layer is substantially not included, may be mentioned. Furthermore, an active material layer comprising a non-bound body including the active material can be formed also by a technique by which a binding is substantially not included in the active material layer (slurry for forming the active material layer). Here, when it is said that the active material layer (slurry for forming the active material layer) substantially does not include a binding agent, specifically, it is implied that the content of the binding agent is 1% by mass or less (lower limit 0% by mass) with respect to 100% by mass of the total solid content included in the active material layer (electrode active material slurry) . The content of this binding agent is more preferably 0.5% by mass or less, even more preferably 0.2% by mass or less, particularly preferably 0.1% by mass or less, and most preferably 0% by mass.

Incidentally, the binding agent that is said to be substantially not included in the active material layer according to the present specification means a known solvent (dispersing medium) drying type binding agent for a lithium ion battery, which is used in order to bind and fix between active material particles and between active material particles and a current collector. Examples of the binding agent include starch, polyvinylidene fluoride, polyvinyl alcohol, carboxymethyl cellulose, polyvinylpyrrolidone, tetrafluoroethylene, and styrene-butadiene rubber. These binding agents for lithium ion batteries are used after being dissolved or dispersed in water or an organic solvent and are dried and solidified by volatilizing the solvent (dispersing medium) components. Thus, active material particles with other active material particles are firmly fixed, and active material particles and a current collector are firmly fixed.

The thickness of the electrode active material layer is preferably 150 to 1,500 $\mu$m, more preferably 180 to 950 $\mu$m, and even more preferably 200 to 800 $\mu$m, with respect to the positive electrode active material layer. Furthermore, the thickness of the negative electrode active material layer is preferably 150 to 1,500 $\mu$m, more preferably 180 to 1,200 $\mu$m, and even more preferably 200 to 1,000 $\mu$m. When the thickness of the electrode active material layer has a value greater than or equal to the above-mentioned lower limit value, the energy density of the battery can be sufficiently increased. On the other hand, when the thickness of the electrode active material layer has a value less than or equal to the above-mentioned upper limit value, the structure of the electrode active material layer can be sufficiently maintained. According to the production method of the present aspect, since the electrode active material slurry substantially does not include a binding agent (binder), the generation of cracks and the like, which can be produced when a thick film of the slurry including a binder is produced, does not occur, and an electrode active material layer as a thick film having a thickness larger than or equal to the above-mentioned lower limit value can be obtained.

The porosity of the electrode active material layer is preferably 35% to 50% for the positive electrode active material layer. Furthermore, the porosity of the negative electrode active material layer is preferably 30% to 60%. When the porosity of the electrode active material layer has a value greater than or equal to the above-mentioned lower limit value, there is no need to make the pressing pressure high when the electrode active material slurry is applied at the time of forming the electrode active material layer, and then the coating film is pressed. As a result, an electrode active material layer having a desired thickness and area can be suitably formed. On the other hand, when the porosity of the electrode active material layer has a value of less than or equal to the above-mentioned upper limit value, the contact between the electron-conductive materials (conductive aid, electrode active material, and the like) in the electrode active material layer can be sufficiently maintained, and an increase in the electron transfer resistance can be prevented. As a result, the charging and discharging reaction can be caused to uniformly proceed in the entirety (particularly, in the thickness direction) of the electrode active material layer. Meanwhile, according to the present specification, the porosity of the electrode active material layer is to be measured by the following method.

(Method for measuring porosity of electrode active material layer)

The porosity of the electrode active material layer is calculated according to the following Formula (1). Meanwhile, the electrolyte solution may be present inside a portion of the pores. Formula (1) : Porosity (%) = 100 - volume ratio (%) occupied by solid content in electrode active material layer

Here, the "volume ratio (%) occupied by solid content" in the electrode active material layer is calculated by the following Formula (2). Formula (2) : Volume ratio (%) occupied by solid content = (solid material volume ($cm^3$)/electrode active material layer volume ($cm^3$)) $\times$ 100

Incidentally, the electrode active material layer volume is calculated from the thickness of the electrode and the application area. Furthermore, the solid material volume is determined by the following procedure. (a) The amounts of addition of the various materials included in the electrode active material slurry are weighed. (b) The electrode active material slurry is applied on the surface of a current collector, and then the weight of the current collector and the coating film is weighed. (c) The slurry after application is pressed, and the weight of the current collector and the coating film after pressing is weighed. (d) The amount of the electrolyte solution suctioned out at the time of pressing is calculated from the "value obtained in (c) - value obtained in (b)". (e) From the values of (a), (c), and (d), the weights of the various materials in the electrode active material layer after pressing are calculated. (f) From the weights of the various materials calculated in (e) and the densities of the various materials, the volumes of the various materials in the electrode active material layer are calculated. (g) Among the volumes of the various materials calculated in (f), only the volumes of solid materials are added together, and the solid material volume is calculated.

Furthermore, regarding the positive electrode active material layer, the density of the electrode active material layer is preferably 2.10 to 3.00 g/$cm^3$, more preferably 2.15 to 2.85 g/$cm^3$, and even more preferably 2.20 to 2.80 g/$cm^3$. Furthermore, the density of the negative electrode active material layer is preferably 0.60 to 1.30 g/$cm^3$, more preferably 0.70 to 1.20 g/$cm^3$, and even more preferably 0.80 to 1.10 g/$cm^3$. When the density of the electrode active material layer has a value larger than or equal to the above-mentioned lower limit value, a battery having a sufficient energy density can be obtained. On the other hand, when the density of the electrode active material layer has a value less than or equal to the above-mentioned upper limit value, a decrease in the porosity of the above-mentioned negative electrode active material layer can be prevented. When a decrease in the porosity is suppressed, the electrolyte solution that fills pores is sufficiently secured, and an increase in the ion transfer resistance in the negative electrode active material layer can be prevented. Meanwhile, in the present specification, the density of the active material layer will be measured by the following method.

(Method for measuring density of active material layer)

The density of the active material layer is calculated according to the following Formula (3). Formula (3): Electrode density (g/$cm^3$) = solid material weight (g) $\div$ electrode volume ($cm^3$)

Incidentally, the solid material weight is calculated by adding only the weights of solid materials among the weights of the various materials in the electrode after pressing, which are obtained in the above section (e). The electrode volume is calculated from the thickness of the electrode and the application area.

After the positive electrode and the negative electrode are produced as described above, a non-aqueous electrolyte secondary battery can be produced by a conventional method. Specifically, a single battery may be produced by laminating the positive electrode and the negative electrode so as to face each other, with an electrolyte layer interposed therebetween. Then, lamination of the electrolyte layer and the electrodes is repeated until the number of single batteries reaches a desired number, and a laminate body is obtained. Next, positive electrode tabs and negative electrode tabs are joined with the laminate body thus obtained, by welding. If necessary, it is desirable to remove any extra tabs and the like by trimming after welding. The joining method is not particularly limited; however, it is superior to perform joining with an ultrasonic welding machine, from the viewpoint that joining can be achieved in a very short time period without generating heat (heating) at the time of joining, and therefore, deterioration of the electrode active material layer caused by heat can be prevented. At this time, the positive electrode tabs and the negative electrode tabs can be disposed so as to face each other (confront with each other) at the same edge (same takeout edge). Thereby, the positive electrode tabs of the various positive electrodes can be bundled into one and can be taken out through the outer casing body as one positive electrode current collecting plate. Similarly, the negative electrode tabs of the various negative electrodes can be bundled into one and can be taken out through the outer casing body as one negative electrode current collecting plate. Furthermore, it is also acceptable that the positive electrode current collecting plate (positive electrode current collecting tab) and the negative electrode current collecting plate (negative electrode current collecting tab) may be disposed to be at opposite edges (different takeout edges).

Next, the laminate body is stored in the outer casing body. The laminate body is interposed, between laminate films, at the top and the bottom, that are used for a battery outer casing body such that the positive electrode current collecting plate (positive electrode current collecting tab) and the negative electrode current collecting plate (negative electrode current collecting tab) are taken out to the outside of the battery outer casing body.

Next, three edges in the outer periphery (seal part) of the top and bottom laminate films are sealed by thermal compression. By sealing three edges in the outer periphery by thermal compression, a three edge-sealed body is obtained. At this time, it is preferable that the thermally sealed part of the edges through which the positive electrode current collecting plate (positive electrode current collecting tab) and the negative electrode current collecting plate (negative electrode current collecting tab) are taken out, be sealed. This is because when these positive electrode current collecting plate and negative electrode current collecting plate are placed at the time of subsequent liquid injection, there is a risk that the electrolyte solution may be scattered or the like at the time of liquid injection.

Incidentally, in the above description, an explanation of the battery having a laminated structure has been carried out; however, the configuration of the battery is not limited to a laminate type, and various shapes such as a rectangular type, a paper type, a cylindrical type, and a coin type can be employed.

Next, an electrolyte solution is injected into the three edge-sealed body through the opening of the remaining one edge of the three edge-sealed body using a liquid injection apparatus . Thereby, an electrolyte layer in which a separator is impregnated with an electrolyte is formed. At this time, it is preferable that the three edge-sealed body be stored in a vacuum box connected to a vacuum pump so that the electrolyte can impregnate the laminate body, particularly the separator and the electrode active material layer, in the three edge-sealed body as quickly as possible. Furthermore, it is desirable to perform injection in a state in which the pressure is lowered and the interior is brought into a high vacuum state. After injection, the three edge-sealed body is taken out from the vacuum box, the remaining one edge of the three edge-sealed body is temporarily sealed, and thereby a laminate type (laminated structure) non-aqueous electrolyte secondary battery is obtained. Incidentally, the electrolyte solution to be injected here may be identical to or different from the electrolyte solution used at the time of forming the electrode active material slurry; however, it is preferable that the electrolyte solutions be identical ones.

[Electrolyte layer]

The electrolyte that is used for the electrolyte layer is not particularly limited, and a liquid electrolyte, a gel polymer electrolyte, or an ionic liquid electrolyte is used without limitations. By using these electrolytes, high lithium ion conductivity can be secured. The electrolyte used for the electrolyte layer may be identical to or different from the electrolyte solution used for the electrode active material layer.

In the present aspect, a separator may be used for the electrolyte layer. The separator has a function of retaining the electrolyte and securing lithium ion conductivity between the positive electrode and the negative electrode, and a function as a barrier between the positive electrode and the negative electrode. Particularly, in the case of using a liquid electrolyte or an ionic liquid electrolyte as the electrolyte, it is preferable to use a separator.

In the present aspect, it is preferable to control the water content of the separator. The water content of the separator is preferably 400 ppm by mass or less. When the water content of the separator is 400 ppm by mass or less, an effect of suppressing an increase in the internal resistance is further exhibited, and the initial capacity and durability are also further increased. The moisture content of the separator is preferably 300 ppm by mass or less, and more preferably 250 ppm by mass or less. Incidentally, since it is more preferable when the moisture content of the separator is lower, the lower limit is not limited. However, even when the water content of the separator is lowered, the effect is saturated. Therefore, in view of the yield at the time of production and the saturation of the effect, the moisture content of the separator is preferably 10 ppm by mass or more, and more preferably 30 ppm by mass or more. The amount of moisture in the separator can be controlled by, for example, putting the production environment in a dry environment. Specifically, it is preferable that the production environment be in a dry atmosphere in which the dew point is -15°C or lower, -30°C to -80°C, or -40°C to -75°C in preferable order. The dry environment is similar to that described in the section for the atmosphere of the production of the electrode active material slurry.

Examples of a form of the separator include a porous sheet separator, a nonwoven fabric separator, and the like, each of which is formed of a polymer or fiber that absorbs and holds the electrolyte.

As the porous sheet separator formed of the polymer or the fiber, for example, a microporous (microporous film) separator can be used. Specific examples of the form of the porous sheet formed of the polymer or the fiber include a microporous (microporous film) separator formed of a hydrocarbon-based resin such as a polyolefin including polyethylene (PE), polypropylene (PP), and the like; a laminate obtained by laminating a plurality of these polyolefins (for example, a laminate having a three-layer structure of PP/PE/PP, and the like), polyimide, aramid, or polyvinylidene fluoride-hexafluoropropylene (PVdF-HFP), and the like; a glass fiber; etc.

The thickness of the microporous (microporous film) separator cannot be unequivocally defined since the thickness varies depending on an intended use. For example, the thickness of a separator used in the applications of a motor-driving secondary battery such as an electric vehicle (EV), a hybrid electric vehicle (HEV), a fuel cell vehicle (FCV), and the like; etc. is desirably 4 to 60 $\mu$m in a single layer or multiple layers. The microporous (microporous film) separator desirably has a fine pore diameter of 1 $\mu$m at maximum (usually a pore diameter of approximately several tens nm).

Examples of the nonwoven fabric separator include a nonwoven fabric using a conventionally known material such as cotton, rayon, acetate, nylon, polyester; a polyolefin such as PP, PE, and the like; polyimide, aramid, and the like alone or in combination thereof. The bulk density of the nonwoven fabric should not be particularly limited as long as sufficient battery characteristics can be obtained by a polymer gel electrolyte with which the nonwoven fabric is impregnated. In addition, the thickness of the nonwoven fabric separator only needs to be the same as that of the electrolyte layer, and is preferably 5 to 200 $\mu$m, and particularly preferably 10 to 100 $\mu$m.

Moreover, it is also preferable to use a laminate obtained by laminating a heat resistant insulating layer on the above-described microporous (microporous film) separator or nonwoven fabric separator as a resin porous substrate layer (separator with a heat resistant insulating layer). The heat resistant insulating layer is a ceramic layer including inorganic particles and a binder. As the separator with a heat resistant insulating layer, a separator having high heat resistance, which has a melting point or thermal softening point of 150°C or higher, and preferably 200°C or higher, is used. The presence of the heat resistant insulating layer relaxes an internal stress of the separator which increases as the temperature rise, and therefore, an effect of suppressing thermal shrinkage can be obtained. As a result, induction of a short-circuit between electrodes of a battery can be prevented, leading to a battery configuration in which the performance is hardly lowered as the temperature rises. In addition, the presence of the heat resistant insulating layer improves a mechanical strength of the separator with the heat resistant insulating layer, and hardly breaks a film of the separator. Furthermore, the separator is hardly curled in a step of producing a battery due to the effect of suppressing thermal shrinkage and the high mechanical strength.

The inorganic particles in the heat resistant insulating layer contribute to the mechanical strength of the heat resistant insulating layer and the effect of suppressing thermal shrinkage. A material used as the inorganic particles is not particularly limited. Examples thereof include oxides ($SiO_2$, $Al_2O_3$, $ZrO_2$, and $TiO_2$), hydroxides, and nitrides of silicon, aluminum, zirconium, and titanium, and composites thereof. These inorganic particles may be derived from mineral resources such as boehmite, zeolite, apatite, kaolin, mullite, spinel, olivine, mica, or the like or may be artificially produced. Further, these inorganic particles may be used alone or in combination of two or more kinds thereof. Among those, from the viewpoint of cost, the inorganic particles, silica ($SiO_2$), or alumina ($Al_2O_3$) is preferably used, and alumina ($Al_2O_3$) is more preferably used.

The weight per unit area of the inorganic particles is not particularly limited, but is preferably 5 to 15 $g/m^2$. The weight per unit area within this range is preferable in terms of obtaining sufficient ion conductivity and maintaining heat resistant strength.

The binder in the heat resistant insulating layer has a function of binding inorganic particles to each other or binding the inorganic particles to a resin porous substrate layer. With the binder, the heat resistant insulating layer is stably formed, and thus, peeling between the resin porous substrate layer and the heat resistant insulating layer is prevented.

The binder used in the heat resistant insulating layer is not particularly limited, and for example, a compound such as carboxymethyl cellulose (CMC), polyacrylonitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), methyl acrylate, and the like can be used as the binder. Among those, carboxymethyl cellulose (CMC), methyl acrylate, or polyvinylidene fluoride (PVDF) is preferably used. These compounds may be used alone or in combination of two or more kinds thereof.

The content of the binder in the heat resistant insulating layer is preferably 2 to 20% by mass with respect to 100% by mass of the heat resistant insulating layer. If the content of the binder is 2% by mass or more, the peeling strength between the heat resistant insulating layer and the resin porous substrate layer can be enhanced, and vibration resistance of the separator can be improved. On the other hand, if the content of the binder is 20% by mass or less, a gap between the inorganic particles can be maintained properly, and therefore, sufficient lithium ion conductivity can be secured.

The thermal shrinkage of the separator with a heat resistant insulating layer is preferably 10% or less in both MD and TD after the separator is held under conditions of 150°C and 2 gf/cm$^2$ for one hour. By using such a highly heat resistant material, the heat generation amount is increased, and shrinkage of the separator can be prevented effectively even when the temperature in a battery reaches 150°C. As a result, induction of a short-circuit between electrodes of a battery can be prevented, leading to a battery configuration in which the performance is hardly lowered as the temperature rises.

[Positive Electrode Current Collecting Plate and Negative Electrode Current Collecting Plate]

A material constituting current collecting plates (25 and 27) is not particularly limited and a known highly conductive material used in the related art as a current collecting plate for use in a lithium ion secondary battery can be used. Preferable examples of the material constituting the current collecting plate include a metal material such as aluminum, copper, titanium, nickel, stainless steel (SUS), an alloy thereof, and the like. From the viewpoints of light weight, corrosion resistance, and high conductivity, aluminum and copper are more preferable, and aluminum is particularly preferable . In addition, the same material or different materials may be used for the positive electrode current collecting plate 25 and the negative electrode current collecting plate 27.

[Positive Electrode Lead and Negative Electrode Lead]

Moreover, although not illustrated, a current collector 11 may be electrically connected to the current collecting plates (25 and 27) via a positive electrode lead or a negative electrode lead. As a material constituting the positive electrode and the negative electrode leads, a material for use in a known lithium ion secondary battery can be similarly adopted. Further, a portion taken out of an exterior material is preferably coated with a heat resistant and insulating thermal shrinkable tube or the like such that the portion has no influence on a product (for example, vehicle parts, in particular, an electronic device or the like) by electric leak due to contact with neighboring devices, wiring, or the like.

[Seal Part]

The seal part (insulating layer) has a function of preventing a contact between current collectors and a short-circuit at an end of a single battery layer. A material constituting the seal part may be any material as long as having an insulating property, a sealing property against falling off of a solid electrolyte, a sealing property against moisture permeation from the outside, heat resistance under a battery operating temperature, and the like. Examples of the material include an acrylic resin, a urethane resin, an epoxy resin, a polyethylene resin, a polypropylene resin, a polyimide resin, a rubber (ethylene-propylene-diene rubber: EPDM), and the like. An isocyanate-based adhesive, an acrylic resin-based adhesive, a cyanoacrylate-based adhesive, or the like may be used, and a hot melt adhesive (a urethane resin, a polyamide resin, or a polyolefin resin) or the like may be used. Among those, a polyethylene resin and a polypropylene resin are preferably used as a material constituting an insulating layer from the viewpoints of corrosion resistance, chemical resistance, manufacturing easiness (film-forming property), economic efficiency, and the like, and a resin mainly containing an amorphous polypropylene resin and obtained by copolymerizing ethylene, propylene, and butene is preferably used.

[Battery Outer Casing Body]

As the battery outer casing body, a known metal can case can be used, and in addition, a bag-like case using the laminate film 29 including aluminum, which is capable of coating a power generating element as shown in Fig. 1, can be used. For the laminate film, for example, a laminate film having a three-layer structure obtained by laminating PP, aluminum, and nylon in this order, or the like can be used, but the laminate film is not limited thereto at all. A laminate film is preferable and an aluminate laminate is more preferable from the viewpoint of being able to be suitably used for a large device battery for EV or HEV due to a high output and excellent cooling performance.
It is possible to improve an initial capacity and durability of the bipolar secondary battery of the present aspect by adopting the below-mentioned production method of a non-aqueous electrolyte secondary battery. Therefore, the bipolar secondary battery of the present aspect is suitably used as a power source for driving EV or HEV.

[Cell Size]

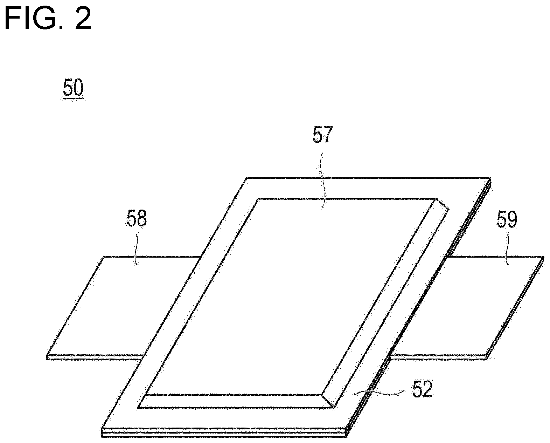

Fig. 2 is a perspective view illustrating an appearance of a flat bipolar lithium ion secondary battery which is a typical embodiment of a secondary battery.
As illustrated in Fig. 2, a flat bipolar secondary battery 50 has a rectangular flat shape, and a positive electrode tab 58 and a negative electrode tab 59 are illustrated from both sides thereof to draw electric power. A power generating element 57 is surrounded by a battery outer casing body (laminate film 52) of the bipolar secondary battery 50, a periphery thereof is thermally fused, and the power generating element 57 is sealed while the positive electrode tab 58 and the negative electrode tab 59 are drawn to the outside. Here, the power generating element 57 corresponds to the power generating element 21 of the bipolar secondary battery 10 illustrated in Fig. 1 described above. In the power generating element 57, a plurality of bipolar electrodes 23 are laminated through the electrolyte layers 17.
Moreover, the lithium ion secondary battery is not limited to a laminate type battery having a flat shape. For example, a wound-type lithium ion secondary battery may, for example, have a cylindrical shape or a rectangular flat shape obtained by deforming such a cylindrical shape, but is not particularly limited thereto. In the battery having a cylindrical shape, a laminate film, a conventional cylindrical can (metal can), or the like may be used for an outer casing body thereof, but is not particularly limited thereto. A power generating element is preferably packaged with an aluminum laminate film. This form can achieve a reduction in weight.

Furthermore, drawing of the tabs (58 and 59) illustrated in Fig. 2 is not also particularly limited. For example, the positive electrode tab 58 and the negative electrode tab 59 may be drawn from the same side, or each of the positive electrode tab 58 and the negative electrode tab 59 may be divided into a plurality of parts to be drawn from the sides, without being limited to that illustrated in Fig. 3. In addition, in the wound-type lithium ion secondary battery, a terminal may be formed using, for example, a cylindrical can (metal can) in place of the tab.

In a typical electric vehicle, the storage space of a battery is approximately 170 L. Since a cell and an auxiliary machine such as a charge/discharge control device and the like are stored in this space, the storage space efficiency of the cell is usually approximately 50%. The loading efficiency of the cell in this space is a factor that dominates a cruising distance of an electric car. When the size of a unit cell is small, the loading efficiency is impaired, and thus, the cruising distance cannot be secured.

Therefore, in the present invention, the battery structure in which the power generating element is covered with the outer casing body is preferably large. Specifically, the length of a short side of a laminate cell battery is preferably 100 mm or more. Such a large battery can be used in vehicle applications. Here, the length of the short side of the laminate cell battery refers to a side having the shortest length. An upper limit of the length of the short side is not particularly limited, but is usually 400 mm or less.

[Volume Energy Density and Rated Discharge Capacity]

In a general electric vehicle, it is an important goal in the development how to make a longer traveling distance (cruising distance) per one charge. Considering such a point, the volume energy density of a battery is preferably 157 Wh/L or more, and a rated capacity thereof is preferably 20 Wh or more.

Furthermore, from the viewpoint of a large-sized battery, which is different from the viewpoint of the physical size of the electrode, size enlargement of the battery can be defined from the relationship with the battery area and the battery capacity. For example, in the case of a flat laminate type laminate battery, it is preferable that the present invention be applied to a battery in which the value of the ratio of the battery area (projected area of the battery including a battery outer casing body) with respect to the rated capacity is 5 cm$^2$/Ah or greater, and the rated capacity is 3 Ah or greater. Furthermore, the aspect ratio of a rectangular-shaped electrode is preferably 1 to 3, and more preferably 1 to 2. Incidentally, the aspect ratio of an electrode is defined as a length-to-width ratio of a rectangular-shaped positive electrode active material layer. By adjusting the aspect ratio to such a range, an advantage of making both the performance required for a vehicle and the mounting space achievable is realized.

[Battery Pack]

A battery pack is constituted by connecting a plurality of batteries to each other. Specifically, the battery pack is formed by serialization of at least two batteries, parallelization thereof, or serialization and parallelization thereof. By serialization and parallelization, it is possible to freely adjust a capacity and a voltage.

By connecting a plurality of batteries to each other in series or in parallel, it is also possible to form a small attachable or detachable battery pack. In addition, by further connecting a plurality of the small attachable or detachable battery packs to each other in series or in parallel, it is also possible to form a large-capacity and large-output battery pack suitable for a vehicle driving power source or auxiliary power source required to have a high volume energy density and a high volume output density, and it may be decided how many batteries are connected to each other to manufacture a battery pack and how many stages of small assembled batteries are laminated to manufacture a large-capacity battery pack, depending on the battery capacity or output of a vehicle (electric vehicle) on which the batteries are mounted.

[Vehicle]

In the non-aqueous electrolyte secondary battery of the present aspect, a discharge capacity is maintained even after a long-term use, and cycle characteristics are favorable. Furthermore, a volume energy density is high. In a case of use for a vehicle such as an electric vehicle, a hybrid electric vehicle, a fuel cell vehicle, or a hybrid fuel cell vehicle, higher capacity, a larger size, and a longer life are required than in a case of applications of electric/portable electronic devices. Therefore, the non-aqueous electrolyte secondary battery can be suitably used as a vehicle power source, for example, for a vehicle driving power source or an auxiliary power source.

Specifically, a battery or a battery pack formed by combining a plurality of the batteries can be mounted on the vehicle. In the present invention, a long-life battery excellent in long-term reliability and output characteristics can be constituted, and thus, by mounting the battery, a plug-in hybrid electric vehicle having a long EV travel distance and an electric vehicle having a long one-charge travel distance can be constituted. A reason therefor is that an automobile having a long service life and high reliability can be provided by using a battery or a battery pack formed by combining a plurality of the batteries in, for example, an automobile such as a hybrid car, a fuel cell electric car, and an electric vehicle (including a two-wheel vehicle (motor bike) or a three-wheel vehicle in addition to all four-wheel vehicles (an automobile, a truck, a commercial vehicle such as a bus and the like, a compact car, etc.)). However, the applications are not limited to the automobiles, and the battery can also be applied to, for example, various power sources of other vehicles, for example, a moving object such as an electric train and the like, or can also be used as a power source for loading such as an UPS device and the like.

Examples

Hereinafter, the present invention will be described in more detail with reference to Examples. However, the technical scope of the present invention is not limited only to the following Examples . Furthermore, "parts" mean "parts by weight" unless otherwise specified. In addition, steps from preparation of a positive electrode active material slurry and a negative electrode active material slurry to manufacture of a non-aqueous electrolyte secondary battery were performed in a glove box. Furthermore, unless particularly stated otherwise, the processes are carried out at atmospheric pressure.

[Example 1]

<Preparation of electrolyte solution>

In a mixed solvent (volume ratio 1 : 1) of ethylene carbonate (EC) and propylene carbonate (PC), $LiPF_6$ was dissolved at a proportion of 2 mol/L, and thereby an electrolyte solution was obtained.

<Preparation of positive electrode active material slurry>

A positive electrode active material mixture composed of 92 parts of $LiNi_{0.8}Co_{0.15}Al_{0.05}O_2$ powder as a positive electrode active material, 6 parts of acetylene black [manufactured by Denka Co., Ltd., DENKA BLACK (registered trademark)] (average particle size (primary particle size): 0.036 $\mu$m) as a conductive aid, and 2 parts of carbon nanofibers [manufactured by Showa Denko K.K., VGCF (registered trademark), aspect ratio 60 (average fiber diameter: about 150 nm, average fiber length: about 9 $\mu$m), electrical resistivity 40 $\mu\Omega$m, bulk density 0.04 g/cm$^3$] as a conductive aid, was dried at 180°C under a reduced pressure of 100 mmHg (13.33 kPa) for 16 hours or more, and removal of contained moisture was carried out.

Next, inside a glove box (dew point was controlled to -64°C), 47 parts of the electrolyte solution prepared as described above was added to 100 parts of the dried positive electrode active material mixture described above. The mixture thus obtained was mixed at 2,000 rpm for 120 seconds using a mixing and degassing machine (rotating and revolving mixer, ARE-250, manufactured by THINKY CORPORATION), and thereby positive electrode active material slurry 1 was obtained. Incidentally, regarding the dew point, processes including from slurry preparation and electrode application to battery production were all carried out in the same environment. Furthermore, in all the Examples, the atmosphere inside the glove box was set to an argon atmosphere.

<Preparation of negative electrode active material slurry>

A negative electrode active material mixture composed of 94 parts of hard carbon (hardly graphitizable carbon) powder (manufactured by Kureha Battery Materials Japan Co., Ltd., CARBOTRON (registered trademark) PS(F)) as a negative electrode active material, 4 parts of acetylene black [manufactured by Denka Co., Ltd., DENKA BLACK (registered trademark)] (average particle size (primary particle size): 0.036 $\mu$m) as a conductive aid, and 2 parts carbon nanofibers [manufactured by Showa Denko K.K., VGCF (registered trademark), aspect ratio 60 (average fiber diameter: about 150 nm, average fiber length: about 9 $\mu$m), electrical resistivity 40 $\mu\Omega$m, bulk density 0.04 g/cm$^3$] as a conductive aid, was dried at 180°C under a reduced pressure of 100 mmHg for 16 hours or more, and removal of contained moisture was carried out.

Next, inside a glove box (dew point was controlled to -64°C), 90 parts of the electrolyte solution prepared as described above was added to 100 parts of the dried negative electrode active material mixture described above. The mixture thus obtained was mixed at 2,000 rpm for 120 seconds using a mixing and degassing machine (ARE-250, manufactured by THINKY CORPORATION), and thereby negative electrode active material slurry 1 was obtained.

Incidentally, regarding the dew point, processes including from slurry preparation and electrode application to battery production were all carried out in the same environment.

<Drying of current collector and separator>

A carbon-coated aluminum foil (manufactured by Showa Denko K.K., thickness of carbon layer 1 μm, thickness of aluminum layer 20 μm, size 61 × 72 mm) as a positive electrode current collector, a copper foil (manufactured by THANK-METAL CO., LTD., thickness 10 μm, size 61 × 72 mm) as a negative electrode current collector, and a separator (5 cm × 5 cm, thickness 23 μm, CELL GUARD 2500, made of polypropylene) were prepared, and these were left to stand in a glove box at a dew point of -64°C for 16 hours or longer.

<Production of positive electrode>

The positive electrode current collector after drying was masked using a PET sheet such that the size of the slurry-applied part would be 29 × 40 mm. In a state in which an adsorption surface plate was used, and this positive electrode current collector was fixed on the surface plate by lowering the pressure, the positive electrode active material slurry 1 prepared as described above was applied on the positive electrode current collector using an applicator, by setting the gap of the applicator to 650 μm. Furthermore, the rate of application was set to 30 mm/s. By applying the slurry as such, an electrode having a positive electrode active material weight of 80 mg/cm$^2$ was produced.

Six sheets of aramid sheet (manufactured by Japan Vilene Co., Ltd., thickness 45 μm) were disposed on the surface of the slurry after application, and pressing was performed using HIGH PRESSURE JACK J-1 (manufactured by AS ONE CORPORATION). At this time, the pressing pressure was 5 MPa, and pressing was repeatedly carried out until the target electrode density (electrode porosity) was reached. Thus, a positive electrode active material layer was obtained. Incidentally, this positive electrode active material layer had a thickness of 250 μm, a porosity of 40%, and a density of 2.55 g/cm$^3$. Furthermore, a cross-section of the positive electrode active material layer thus obtained was checked with a scanning electron microscope (SEM), and at least a portion of the conductive member formed conductive paths electrically connecting from a first principal surface that was in contact with the electrolyte layer side of the positive electrode active material layer to a second principal surface that was in contact with the current collector side.

<Production of negative electrode>

The negative electrode current collector after drying was masked using a PET sheet such that the size of the slurry-applied part would be 33 × 44 mm. In a state in which an adsorption surface plate was used, and this negative electrode current collector was fixed on the surface plate by lowering the pressure, the negative electrode active material slurry 1 prepared as described above was applied on the negative electrode current collector using an applicator, by setting the gap of the applicator to 600 μm. Furthermore, the rate of application was set to 30 mm/s. By applying the slurry as such, an electrode having a total weight of the negative electrode active material and the conductive aid of 41 mg/cm$^2$ was produced.

Six sheets of aramid sheet (manufactured by Japan Vilene Co., Ltd., thickness 45 μm) were disposed on the surface of the slurry after application, and pressing was performed using HIGH PRESSURE JACK J-1 (manufactured by AS ONE CORPORATION). At this time, the pressing pressure was 5 MPa, and pressing was repeatedly carried out until the target electrode density (electrode porosity) was reached. Thus, a negative electrode active material layer was obtained. Incidentally, this negative electrode active material layer had a thickness of 280 μm, a porosity of 34%, and a density of 1.00 g/cm$^3$. Furthermore, a cross-section of the negative electrode active material layer thus obtained was checked with a scanning electron microscope (SEM), and at least a portion of the conductive member was found to have formed conductive paths electrically connecting from a first principal surface that was in contact with the electrolyte layer side of the negative electrode active material layer to a second principal surface that was in contact with the current collector side.

<Production of lithium ion battery>

A battery was formed by interposing a separator (5 cm × 5 cm, thickness 23 μm, CELL GUARD 2500, made of polypropylene) between the positive electrode and the negative electrode, this battery was interposed between a terminal (Ni, 5 mm × 3 cm) -attached copper foil (3 cm × 3 cm, thickness 17 μm) and a terminal (Al, 5 mm × 3 cm)-attached carbon-coated aluminum foil (3 cm × 3 cm, thickness 21 μm), and it was encapsulated using two sheets of a commercially available thermal fusion type aluminum laminate film (10 cm × 8 cm). Then, 60 μL of an electrolyte solution similar to that described above was injected thereto, after that, this outer casing body was vacuum-sealed, and thereby a lithium ion battery was produced.

[Example 2]

<Preparation of electrolyte solution>

An electrolyte solution was obtained in the same manner as in Example 1.

<Preparation of positive electrode active material slurry>

The positive electrode active material mixture obtained in the same manner in Example 1 was dried at 140°C under a reduced pressure of 100 mmHg for 16 hours or longer, and removal of contained moisture was carried out.
Next, positive electrode active material slurry 2 was obtained in the same manner as in Example 1, except that the dew point inside the glove box was controlled to -50°C.

<Preparation of negative electrode active material slurry>

The negative electrode active material mixture obtained in the same manner as in Example 1 was dried at 140°C under a reduced pressure of 100 mmHg for 16 hours or longer, and removal of contained moisture was carried out.
Next, negative electrode active material slurry 2 was obtained in the same manner as in Example 1, except that the dew point inside the glove box was controlled to -50°C.

<Drying of current collector and separator>

Drying of the current collector and the separator was carried out in the same manner as in Example 1, except that the positive electrode current collector and the negative electrode current collector were changed to resin current collectors, and the resin current collectors and the separator were left to stand for 16 hours or longer in a dry environment at a dew point of -50°C. Incidentally, the resin current collectors were produced by the following method.
In a twin-screw extruder, 75% by mass of polypropylene [trade name "SUNALLOMER (registered trademark) PL500A", manufactured by SunAllomer, Ltd.] (B-1) , 20% by mass of acetylene black (AB) (DENKA BLACK (registered trademark)), and 5% by mass of a modified polyolefin resin (UMEX (registered trademark) 1001 manufactured by Sanyo Chemical Industries, Ltd.) as a dispersant (A) for a resin current collector were melt-kneaded under the conditions of 180°C, 100 rpm, and a retention time of 10 minutes, and a material for a resin current collector was obtained. The material for a resin current collector thus obtained was extrusion molded, and thereby a resin current collector (20% AB-PP) was obtained. The resin current collector was cut out into a size of 3 cm × 3 cm, one surface was subjected to nickel vapor deposition, and then a terminal (5 mm × 3 cm) for a current extraction was connected thereto.

<Production of positive electrode>

An electrode was produced in the same manner as in Example 1, except that the fixation of the current collector was achieved by changing from the method of using an adsorption surface plate and fixing the current collector on the surface plate by lowering the pressure, to a method of applying EC/PC (EC : PC = 1 : 1 (volume ratio), water content in the solvent was 15 ppm by mass) as a solvent on a surface plate and then disposing a current collector, and that the positive electrode active material slurry 2 was used instead of the positive electrode active material slurry 1.
A cross-section of the positive electrode active material layer thus obtained was checked with a scanning electron microscope (SEM), and at least a portion of the conductive member was found to have formed conductive paths electrically connecting from a first principal surface that was in contact with the electrolyte layer side of the positive electrode active material layer to a second principal surface that was in contact with the current collector side.

<Production of negative electrode>

An electrode was produced in the same manner as in Example 1, except that the fixation of the current collector was achieved by changing from the method of using an adsorption surface plate and fixing the current collector on the surface plate by lowering the pressure, to a method of applying EC/PC (EC : PC = 1 : 1 (volume ratio), water content in the solvent was 15 ppm by mass) as a solvent on a surface plate and then disposing a current collector, and that the negative electrode active material slurry 2 was used instead of the negative electrode active material slurry 1.
A cross-section of the negative electrode active material layer thus obtained was checked with a scanning electron microscope (SEM), and at least a portion of the conductive member was found to have formed conductive paths electrically connecting from a first principal surface that was in contact with the electrolyte layer side of the negative electrode active material layer to a second principal surface that was in contact with the current collector side.

<Production of lithium ion battery>

A lithium ion battery was produced in the same manner as in Example 1.

[Example 3]

A lithium ion battery was produced in the same manner as in Example 2, except that (1) the powder drying conditions for the positive electrode active material and the negative electrode active material during the preparation of the positive electrode active material slurry and the preparation of the negative electrode active material slurry were changed from 140°C and 16 hours or longer to 120°C and 16 hours or longer; (2) the environment inside the glove box was changed from a dew point of -50°C to -40°C; and (3) the drying of the current collectors and the separator was changed to a dew point of -40°C for 16 hours or longer.

[Comparative Example 1]

A lithium ion battery was produced in the same manner as in Example 1, except that (1) the powder drying conditions for the positive electrode active material and the negative electrode active material during the preparation of the positive electrode active material slurry and the preparation of the negative electrode active material slurry were changed from 180°C and 16 hours or longer to 100°C and 6 hours; (2) the environment inside the glove box was changed from a dew point of -50°C to -45°C; and (3) the current collectors were changed to resin current collectors, and the drying of the current collectors and the separator was changed to a dew point of -45°C for 16 hours or longer.

[Comparative Example 2]

A lithium ion battery was produced in the same manner as in Comparative Example 1, except that the powder drying conditions for the positive electrode active material and the negative electrode active material during the preparation of the positive electrode active material slurry and the preparation of the negative electrode active material slurry were changed from 100°C and 6 hours to 80°C and 6 hours.

The production conditions for Examples and Comparative Examples will be described below.

[Table 1]

|  | Drying conditions for electrode active material | Production atmosphere (dew point) | Drying of current collectors and separator (dew point) | Fixing method |
|---|---|---|---|---|
| Example 1 | 180°C, 16 hours or longer | -64°C | -64°C | Adsorption |
| Example 2 | 140°C, 16 hours or longer | -50°C | -50°C | EC/PC |
| Example 3 | 120°C, 16 hours or longer | -40°C | -40°C | EC/PC |
| Comparative Example 1 | 100°C, 6 hours | -45°C | -45°C | Adsorption |
| Comparative Example 2 | 80°C, 6 hours | -45°C | -45°C | Adsorption |

<Evaluation methods>

1. Method of measuring water content

Regarding the water contents (water amount and moisture contents) of the electrode active material slurries, separator, and current collectors, a certain amount was weighed, and measurement was carried out using a Karl Fischer moisture meter. Incidentally, specifically, measurement was performed by volatilizing moisture in a sample using a moisture volatilizing apparatus, introducing the volatilized moisture into a titration cell with a carrier gas, and measuring the moisture.

2. DCR (Direct Current Resistance)

Each of the lithium ion batteries produced in Examples and Comparative Examples was subjected to constant current-constant voltage charging at 25°C and 0.1 C up to an upper limit voltage of 3.62 V (state of charge (SOC) was about 50%) (condition for termination: the current value was less than 0.01 C in a constant voltage mode). Subsequently, constant current discharge at 0.1 C was carried out for 30 seconds. Then, the DCR (Direct Current Resistance) was measured based on the following formula, using the cell voltage (V1) immediately before the initiation of discharge and the cell voltage (V2) after 5 seconds of discharge in the process of constant current discharge.

$$[\text{Mathematical Formula 1}]$$

$$DCR = (V1 - V2)/I \times S$$

I: Current value at the time of discharge
S: Area of electrode

The results are presented in Table 1.

3. Discharge capacity

Under the conditions of 25°C, each of the lithium ion batteries produced in various Examples and Comparative Examples was subjected to constant current-constant voltage (CC-CV) charging up to 4.2 V with a current of 0.1 C (condition for termination: the current value was less than 0.01 C in a constant voltage (CV) mode).
Subsequently, the lithium ion battery was discharged to 2.5 V with a constant current (CC) of 0.5 C, and the discharge capacity (mAh/g) per weight of the positive electrode active material was determined.
The results are presented in Table 1.

4. Capacity retention rate after 300 cycles

Under the conditions at 45°C, each of the lithium ion batteries produced in Examples and Comparative Examples was subjected to constant current-constant voltage (CC-CV) charging up to 4.2 V with a current of 0.5 C (condition for termination: the current value was less than 0.1 C in a CV mode).
Subsequently, the charging and discharging process of discharging to 2.5 V with a current of 0.5 C was repeated 300 times, by taking a rest of 10 minutes between the processes. The percentage of the discharge capacity of the 300th cycle with respect to the discharge capacity of the first cycle was calculated, and thereby the capacity retention rate after 300 cycles was determined.
The results are presented in Table 2.

[Table 2]

| | Water content of electrode active material slurry (ppm by mass) | Water content of current collector (ppm by mass) | Water content of separator (ppm by mass) | Amount of moisture included in production atmosphere (amount of moisture included in space where electrode active material slurry was produced) (ppm by volume) | DCR ($\Omega c m^2$) | Capacity (mAh/g) | Capacity retention rate (%) |
|---|---|---|---|---|---|---|---|
| Example 1 | 150 | 50 | 50 | 6 | 11.8 | 78.7 | 87.8 |
| Example 2 | 240 | 170 | 170 | 40 | 13.2 | 76.4 | 85.4 |
| Example 3 | 480 | 220 | 220 | 127 | 13.2 | 75.5 | 84.9 |
| Comparative Example 1 | 550 | 170 | 170 | 70 | 17.1 | 59.0 | 78.2 |
| Comparative Example 2 | 960 | 170 | 170 | 70 | 17.7 | 55.1 | 79.0 |

From the results described above, in the lithium ion secondary batteries of Examples 1 to 3, in which the water content of the electrode active material slurry was less than 500 ppm by mass, the DCR was noticeably decreased, and the initial capacity and the capacity retention rate were also noticeably increased, compared to comparative examples.

The present application is based on Japanese Patent Application No. 2018-74854, filed April 9, 2018, the disclosure of which is incorporated herein in its entirety by reference.

Reference Signs List

| | |
|---|---|
| 10, 50 | Bipolar secondary battery |
| 11 | Current collector |
| 11a | Outermost layer current collector on positive electrode side |
| 11b | Outermost layer current collector on negative electrode side |
| 13 | Positive electrode active material layer |
| 15 | Negative electrode active material layer |
| 17 | Electrolyte layer |
| 19 | Single battery layer |
| 21, 57 | Power generating element |
| 23 | Bipolar electrode |
| 25 | Positive electrode current collecting plate (positive electrode tab) |
| 27 | Negative electrode current collecting plate (negative electrode tab) |
| 29, 52 | Laminate film |
| 31 | Seal part |
| 58 | Positive electrode tab |
| 59 | Negative electrode tab |

**Claims**

1.  A method for producing a non-aqueous electrolyte secondary battery that comprises:

    a current collector; and
    an electrode active material layer disposed on a surface of the current collector, the electrode active material layer comprising a non-bound body including an electrode active material,
    the method comprising:

    a step of applying an electrode active material slurry including an electrode active material, a lithium salt, and a non-aqueous solvent on the surface of the current collector and thereby forming a coating film, wherein a water content of the electrode active material slurry is less than 500 ppm by mass.

2.  The method for producing a non-aqueous electrolyte secondary battery according to claim 1, wherein the current collector is a resin current collector, and a water content of the current collector is 400 ppm by mass or less.

3.  The method for producing a non-aqueous electrolyte secondary battery according to claim 1 or 2, wherein, when the electrode active material slurry is applied on the surface of the current collector, the current collector is adsorbed to a fixture under reduced pressure, or a non-aqueous solvent which does not include a hydroxyl group and in which a water content is less than 50 ppm by mass is applied on the fixture and then the current collector is disposed on the fixture.

4.  The method for producing a non-aqueous electrolyte secondary battery according to any one of claims 1 to 3, wherein an amount of moisture included in a space in which the electrode active material slurry is prepared is 150 ppm by volume or less.

5.  The method for producing a non-aqueous electrolyte secondary battery according to any one of claims 1 to 4, further comprising:

    a step of mixing the electrode active material, the lithium salt, and the non-aqueous solvent and thereby preparing an electrode active material slurry; and
a step of drying the electrode active material before mixing the electrode active material, the lithium salt, and the non-aqueous solvent.

6. The method for producing a non-aqueous electrolyte secondary battery according to any one of claims 1 to 5, further comprising:

a step of mixing a conductive aid, the electrode active material, the lithium salt, and the non-aqueous solvent and thereby preparing an electrode active material slurry; and
a step of drying the conductive aid before mixing the electrode active material, the lithium salt, and the non-aqueous solvent.

FIG. 1

FIG. 2

## INTERNATIONAL SEARCH REPORT

| | International application No. |
|---|---|
| | PCT/JP2019/012204 |

### A. CLASSIFICATION OF SUBJECT MATTER

Int. Cl. H01M4/139(2010.01)i, H01M4/13(2010.01)i, H01M4/62(2006.01)i, H01M4/66(2006.01)i

According to International Patent Classification (IPC) or to both national classification and IPC

### B. FIELDS SEARCHED

Minimum documentation searched (classification system followed by classification symbols)

Int. Cl. H01M4/139, H01M4/13, H01M4/62, H01M4/66

Documentation searched other than minimum documentation to the extent that such documents are included in the fields searched

Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2018/055956 A1 (NISSAN MOTOR CO., LTD.) 29 March 2018, paragraphs [0029], [0093], [0110], [0158], [0169]-[0176] (Family: none) | 1-6 |
| Y | WO 2017/188043 A1 (KANEKA CORP.) 02 November 2017, paragraphs [0037], [0049], [0050] & CN 108780886 A | 1-6 |
| Y | JP 2012-204031 A (DAINIPPON SCREEN MFG. CO., LTD.) 22 October 2012, paragraphs [0027], [0033]-[0037], fig. 3-6 (Family: none) | 3 |
| Y | WO 2017/057486 A1 (JSR CORP.) 06 April 2017, paragraphs [0025], [0026], [0039], [0121] & US 2018/0301291 A1, paragraphs [0047]-[0049], [0062], [0186] & EP 3358657 A1 & CN 107851797 A | 4 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13.06.2019 | 25.06.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/012204

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2018-055923 A (SANYO CHEMICAL INDUSTRIES, LTD.) 05 April 2018, paragraphs [0007], [0010], [0113] (Family: none) | 4 |
| A | JP 2015-057633 A (TOKYO OHKA KOGYO CO., LTD.) 26 March 2015, paragraph [0029] & KR 10-2015-0020085 A & TW 201521083 A | 1-6 |
| A | WO 2015/141767 A1 (UMEKAWA, Toyofumi) 24 September 2015, paragraphs [0006], [0011] (Family: none) | 1-6 |

Form PCT/ISA/210 (continuation of second sheet) (January 2015)

**EP 3 780 172 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002373701 A
- WO 2016104679 A
- US 2018048023 A
- JP 2018074854 A